# EUROPEAN PATENT APPLICATION

(11) **EP 4 407 049 A1**
(43) Date of publication of application: **31.07.2024**
(21) Application number: 23153388.6
(22) Date of filing: 26.01.2023
(51) Int. Cl.: C21B 13/00, C01B 3/04, C22B 7/00, C22B 7/02

(54) **THE BUTTERBRIDGE PROCESS FOR SIMULTANEOUS AMMONIA CRACKING AND DRI PRODUCTION**

(71) Applicant: Oterdoom, Harmen, 1951 MN Velsen-Noord, Noord Holland (NL); Butter Bridge BV, 1951 MN Velsen Noord, Noord Holland (NL)
(72) Inventor: OTERDOOM, Harmen, 1951 MN Velsen-Noord, Noord Holland (NL)

(57) **Abstract**

The Butterbridge Process takes two processes and combines them into one. On the one hand, the industry needs alternative sources for hydrogen derived from natural gas from fossil deposits. Ammonia, especially produced with renewable energy, is such a source for hydrogen. On the other hand, fresh iron units made from ore are needed but to reduce CO2 emissions these should be produced without use of fossil carbon carriers like coal, coke, or natural gas. Both issues are to date seen as separate problems by the steel industry, the industry busy with hydrogen in production, distribution, and transport (from here H2-supply industry), and the chemical industry.

In the Butterbridge process ammonia is continuously cracked while simultaneously DRI is continuously produced. The DRI can be extracted from the process continuously or batchwise. By using a hydrogen carrier like ammonia as a reductant for iron oxide, but deliberately not aiming for a maximum conversion rate of the hydrogen carrier, two goals can be achieved:
• hydrogen production by cracking hydrogen carrying gas, and
• prereduction of the iron oxide to usable DRI.

Each individually may be unattractive at any given moment based on the market situation, but the Butterbridge process allows for changing the focus of the end-products, to maximise profit or process efficiency to the needs and requirements of the steel, H2-supply, and chemical industries. The composition and production rate of both DRI and H2 can be adjusted by changing amongst others feed-rate of iron oxide or ammonia or both, reactor size, and temperatures of the reactor and material streams.

## Description

### Background of the invention

DRI stands for Direct Reduced Iron, and typically is the product of iron ore that has been treated with a solid reductant like coal or reducing gas like methane, syngas, or hydrogen. The reduction degree of iron oxide depends on many factors including but not limited to particle size, Fe-content, gangue content, packing, time, temperature, and used reducing medium.

DRI is currently mostly made from iron ore and coal, natural gas, or syngas. All three rely heavily on fossil fuels. Syngas a mixture of CO and H2 and can be made from natural gas and steam. For CO2 free production of steel hydrogen is foreseen to play a big role. However, availability of hydrogen is a challenge, also for existing steel plants. It is therefore an idea to make ammonia there where green energy is available and transport the ammonia as hydrogen carrier to there where hydrogen is needed. The idea is to crack ammonia again and make hydrogen and nitrogen. Some ideas exist where ammonia is solely used to reduce iron. This is described for example in Hosokai-2011 and Dam-2020.

Commonly the DRI used in discussions about electrification of the steel industry is highly metallized. But this is not required. Steel and hot metal can be made directly from iron ore, scrap, highly metallized (> 90%) iron oxide, or anything in between.

There is therefore no real limit or requirement on the prereduction and metallization of the used DRI. The conversion degree depends on the used gas, time, temperature, presence of a catalyst, type of catalyst. The Butterbridge process allows to adjust any of said variables and others to be adjusted in such a way as to reach the optimal result be it economic, technical, environmental.

Ammonia can play a big role in the industry as a chemical and for energy supply. When hydrogen is needed but is supplied as ammonia (NH3), then the ammonia needs to be converted to hydrogen by a cracking process. The NH3 is cracked to H2 and N2 according to:

2NH3(g) → N2(g) + 3H2(g)

Such a cracking reaction depends on factors like time and temperature, and the presence of a catalyst that speeds up the reaction.

Many patents are covering the cracking of ammonia, typically based on the use of temperature, sometimes supported by changing the pressure. Such patents are not relevant as these do not include the use of a catalyst.

Other patents do include catalysts. Metal oxide catalysts are known catalysts as described in for example in patent JPS5310363A from 1976. The mentioned oxide of chromium on titanium oxide is used only as a catalyst without aiming to reduce the chromium oxide for subsequent use in the chrome industry.

The Butterbridge process specifically aims to produce H2 and DRI - or any other pre-reduced metallic oxide- for use in the metallurgical industry, which is an innovation to others like for example US1915120. This patent from 1930 describes the use of iron oxide as a catalyst in cracking ammonia but does not describe a process that combines cracking of ammonia with the industrial production of DRI. Similarly, the patents GB1460226A and US3979336 describe use of iron oxide containing material as a catalyst for cracking NH3, but not that the same process is also a deliberately designed continuous DRI production process.

### Detailed description

The Butterbridge process is the process in which ammonia and iron oxide are used to make both hydrogen and direct reduced iron (DRI). The process is unique and innovative in that it does not focus on reducing iron ore as efficiently as possible, nor aims to only crack ammonia as efficiently possible. Instead, the Butterbridge process is ideal to be used at the local economically and environmentally optimal operational point to crack ammonia using iron ore as a catalyst, while at the same time reducing iron ore with ammonia as a reducing gas. Other reducing media and other reducible oxides can be used. Key to the ammonia cracking in the Butterbridge process is that the oxide can be discarded and directly used in the metal industry.

Ideally a reactor using the Butterbridge process is located close to steel or other metal industry. This way both hydrogen and DRI can be used directly in the metal processing plant to save energy and transport of both DRI and hydrogen. However, it may also be desired not to be near the steel industry. It may be desirable to produce hydrogen for transport and DRI for direct use, use the hydrogen on site and transport the DRI, or to transport both.

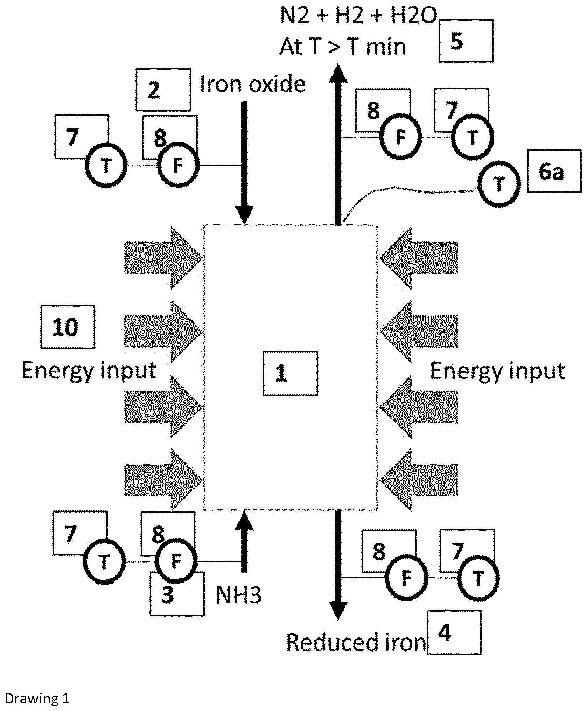

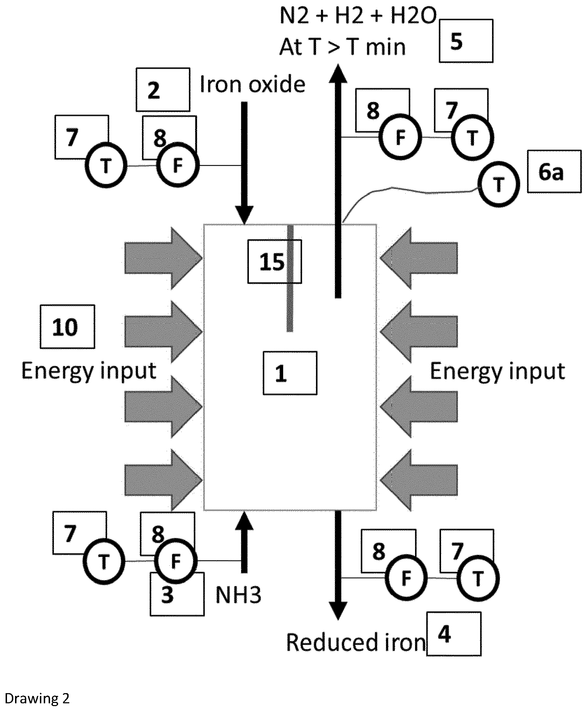

Drawings attached support the description of the invention. For clarity, not every numbered item can be found back in every drawing. In drawing 1 and drawing 2 for example two configurations are given. A reactor (1) is where the reactions between ammonia and iron oxide take place. Many reactors exist that can be used for the processing of natural materials that are fine like sand or lumpy like ore chips. Material can also be agglomerated for example pellet sized, typically from 4 mm up to 16 mm, but possibly of a different sizing if this does not prevent reactions from taking place or gas from flowing.

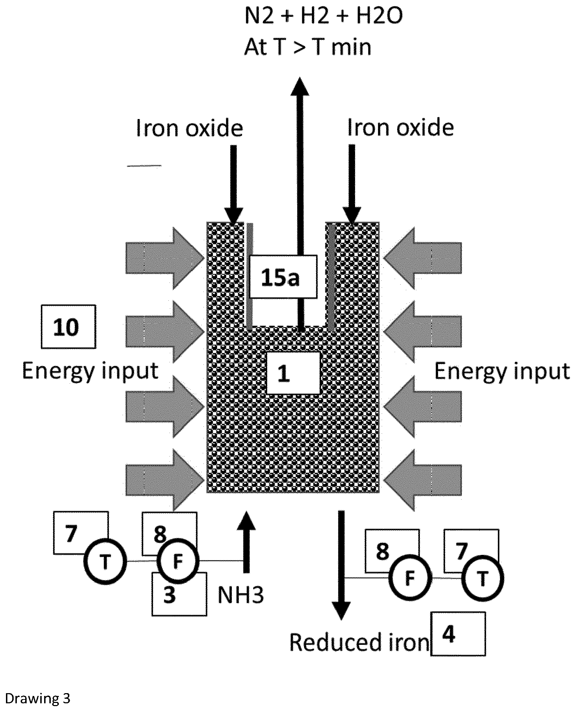

The difference between the configurations in drawing 1 and drawing 2 is that a partial vertical separation wall (16) is present in drawing 2. This allows cold iron oxide to be charged at one side of the wall, and to preheat it before it encounters the upward flowing cracked gas consisting of N2 and H2 gas. This wall could even be moveable vertically to optimise for the desired results regarding DRI production and grade, H2 recovery, or cracking efficiency. The separation wall could be a straight plate or tubular. Also, a configuration is possible where a pipe is lowered down or moved into a reactor to a certain level within the reactor is possible as shown in drawing 3 marked by (16a). This allows side or center feeding of iron oxide while the cracked gas leaves the burden there where not the iron ore is charged. In drawing 3 a configuration is shown where iron oxide is charged on the outside while cracked gas is extracted from a certain level from the reactor to respect temperature requirements as described later. Iron oxide is in this case shown by the black-white texture, while some instrumentation has been left out for purpose of clarity.

The oxide material flow (2) and ammonia flow (3) into the reactor as well as the solid material (4) and gasses (5) coming out of the reactor are measured for flowrate, temperature, and composition by temperature measurements (6) and mass (flow) measurements (7). Especially the temperature for the cracked gas coming out of the reactor (6a) is important, as this has the biggest influence on how to control the Butterbridge process and change setpoints to the reactor. The cracked gas final composition (5) will depend on factors and variables described below. Pressure measurements can be installed for operational control and safety purposes.

Based on factors like but not limited to the analyses of all material streams, material type, reactor size, production targets, solid particle size distribution, it can be beneficial to adjust operational parameters like but not limited to the flowrates for gas and iron oxide, the energy input, extraction point of cracked gas or injection point of ammonia or energy input distribution.

The ideal process temperature at which the formed nitrogen and hydrogen leave the solid, (partially) reduced material is determined by the required composition and properties of the reduced material. For iron ore, the temperature at which the gas separates from the solid material should be at least above 400°C, and for nitride-low or nitride-free iron above 600°C or even 700°C.

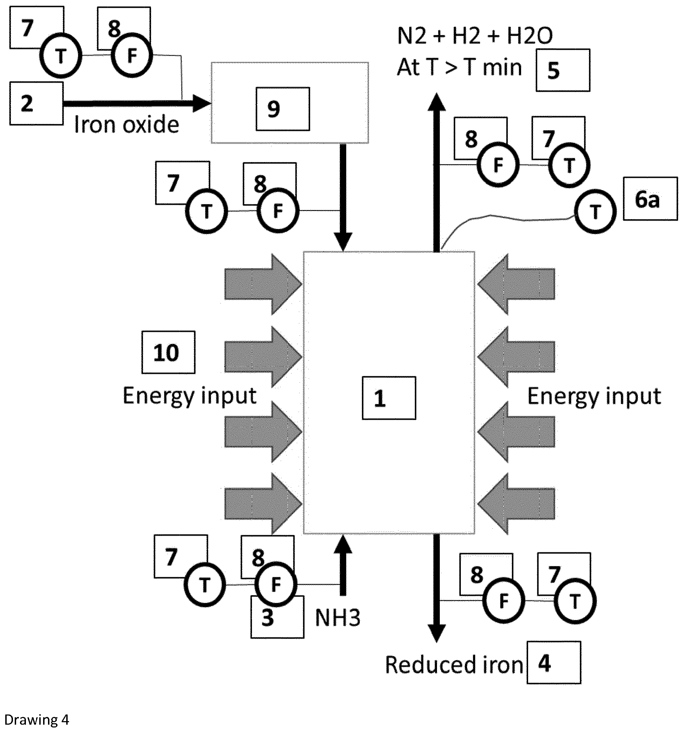

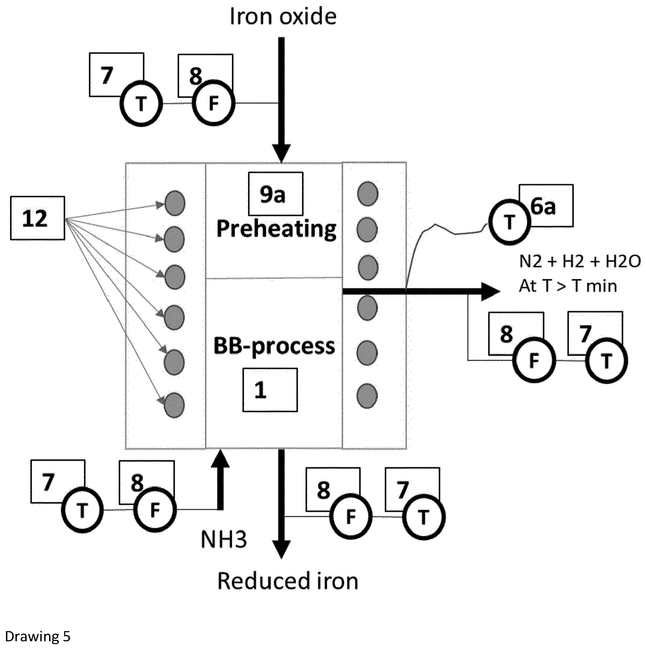

It can therefore be beneficial to either preheat the iron ore in a separate embodiment (9) as shown in drawing 4 or integrated in a single embodiment as given by (9a) in drawing 5, where cracked gas is then extracted in some way before the preheating part. A similar process concept is shown in drawing 2 and drawing 3, where the cracked gas extraction point and charged solid material are at different levels to ensure no backreaction of N2 +3H2 → 2NH3 will occur. Ammonia could be preheated too.

The cracking of ammonia and the reduction of iron ore are both endothermic, i.e. extra energy input is needed to make the reactions happen. This is shown with big arrows (10) in the attached drawings, where energy comes in some way from the side.

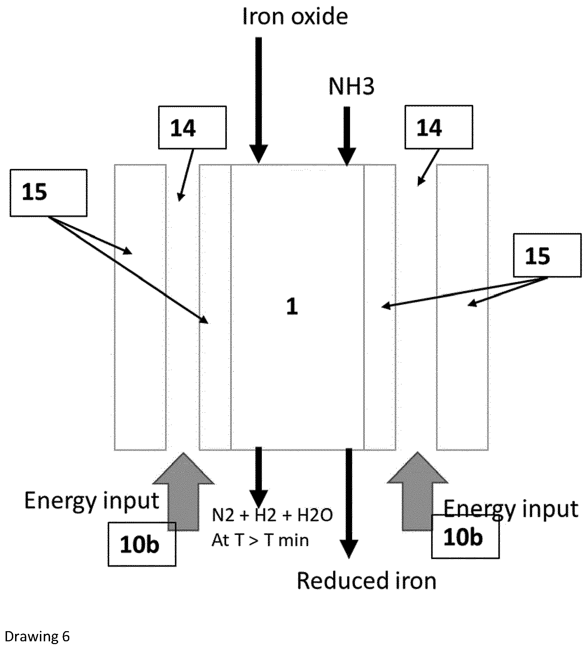

If the reactor permits, as for example in the DCI reactor where heating channels (14) exist separated from the main reaction channel, then other gasses like methane or propane, or plasma torches can be used for energy input (10b). This is shown in drawings 6, drawing 7, and drawing 8. The channels (14) can be made within and lined by refractory (15) or other material that is capable to deal with the conditions. Such configuration is known from for example coke production or other pieces of equipment.

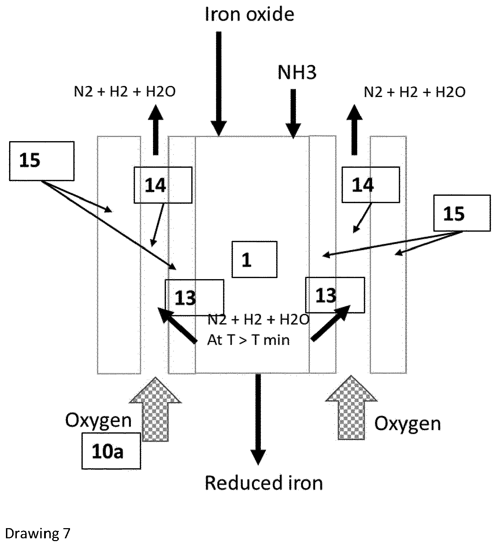

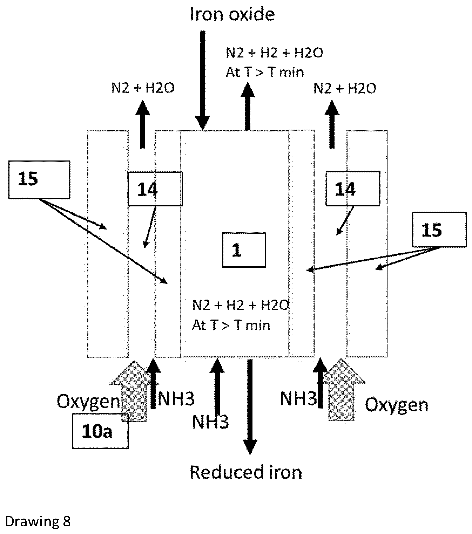

In the case where cracked gas or ammonia is combusted with oxygen, the injection of oxygen is marked with (10a). Two possible configurations are shown in drawing 7 and drawing 8. In the case where cracked gas is used as shown in drawing 7, this is extracted to the side (13) to the combustion channel and partially combusted with some oxygen (10a) so still most of the H2 can be used for other purposes. If ammonia is used as shown in drawing 8, then just enough ammonia is combusted to heat the reactor, with minimal to no H2 or NH3 lost. Note that the shown configuration can also be combined with an external preheater or an internal preheating section, counter-current and co-current operation, and "halfway" extraction of the cracked gas.

Energy input to run the process can be electrically via resistance heating using coils, plasma torch(es), or induction. A version with electrical heating by resistance coils (12) is given in drawing 5, but other designs can reach the similar desired result.

The reduction degree of the DRI is typically bigger than 5% but can easily each over 30% and reaches ideally well over 70% to save energy consumption in the subsequent process. In case of maximization of reduction of DRI, then a slow iron ore feed rate and high flow rate of ammonia can achieve this target. As a consequence, the conversion rate of ammonia to hydrogen and nitrogen may be lower than could be possible if the process is optimized for ammonia cracking.

The conversion degree of ammonia is aimed to be at least 50% but ideally well over 90%. To reach high conversion rates, for example a high flowrate of iron ore and a low flow rate of ammonia can be used. As a consequence, there will be a low reduction degree of the iron ore. Because part of the formed hydrogen is used for the reduction of the iron oxide, the recovery of hydrogen will depend on factors like the feed-rates of gas and oxide, reactor size, residence time, and temperatures.

From the above it becomes clear that conversion rate and reduction degree can both be affected and thus controlled in a single reactor, which makes the Butterbridge process uniquely suited for the current situation where both CO2 free iron ore reduction and cracking of green ammonia are needed to support efforts in working against global warming.

### Additional features

The Butterbridge process allows for many additions, adjustments, and variations that have been known to improve an operation or process.

The oxide pellets or green pellets or powder material can be mixed with catalytic pellets or balls or catalytic powders if these can easily be separated from the DRI and do not disturb or may even have benefit further processing of DRI. On the first, one could use non-magnetic catalyst that can easily be separated from the magnetic DRI. On the second, one example is the use of nickel or chrome containing materials that can be used in the production of (stainless) steel.

Residual ammonia can be removed using an acid bath like HCl or H2SO4 or HNO3. The formed ammonium salt can be used for example in the chemical industry or for fertilizer.

The prereduction level of the DRI can vary from very low to high. By mixing the BB-DRI with DRI or ore or scrap from other sources an ideal mix can be obtained for the subsequent processing step for example but not limited to blast furnace, EAF, SAF, melter, smelter, OSBF, POBF, OBF, or converter.

The process can be optimised by adding additional catalytic material like for example but not limited to metallized iron oxide carriers or even metallic iron with the feed.

The pressure of the system can be changed to be either above or below atmospheric to affect the products from the reactor.

The unreduced metal oxide can be charged at such high temperature that no reverse reaction N2 + H2 → NH3 would occur or at least be minimized. For example, iron ore pellets are preheated and charged at a temperature too high for the formation of NH3 from N2 and H2 in colder reactor zones or by coming into contact with cold feed.

Another option is that a single unit is divided in such a way that cold ammonia, or any other hydrogen carrier, comes in contact with the hot iron carrier thus releasing hydrogen, and that the hydrogen and other gases are extracted from the reactor before it could recombine to form the original hydrogen carrier.

### References

Hosokai-2011. S. Hosokai, Y. Kasiwaya, K. Matsui, N. Okinaka, T. Akiyama. Ironmaking with ammonia at low temperature. Environmental Science & Technology, 45, pp. 821-826. 2011

Dam-2020. O. Dam. Efecto de la decomposition de gas de amoniaco (NH3) sobre el hinchamiento de oxidos de hierro durante reduccion. Revista Athenea en ciencias de la ingenieria Vol. 1, Nº 2 Diciembre 2020 (pp. 05-11).

JPS5310363A 1976 Decomposing method of ammonia.

US1915120 1930 G.W. Burke Apparatus for decomposition of ammonia

GB1460226A 1974 Golosman Catalyst for dissociation of ammonia method for preparing same and method for dissociation of ammonia with said catalyst.

US3979336 1976 Golosman Catalyst for dissociation of ammonia and method of preparing the same.

## Claims

1. A process that is innovative in that it is developed to allow simultaneous cracking of specifically ammonia and reduction of iron ore, while being flexible to optimize production of both DRI and hydrogen.

2. A process that can be applied with several different industrially available hydrogen containing reducing gases like but not limited to ammonia, natural gas, biogas, syngas, or even gasified liquids.

3. A process that can be applied on multiple different available iron units, including for example but not limited to lump and fine ore, sintered, briquetted, and pelletized ore, residues from the iron industry like flue dusts, scales, and sludges, or oxidised iron fines coming from for example iron-air or iron-oxygen battery systems.

4. A process that can be applied in a range of different industrially available processing units, including for example but not limited to Midrex, Energiron, Hyfor, Hyrex, Cirored, Circofer, Hisarna, Höganäs process, rotary kiln, fluidised bed, DCI reactor as patented by Pronovation/DOPS, a CALIX type reactor, or any other system where a hydrogen containing gas is or can be used to reduce iron oxide or other metallic oxides.

5. A process that can be applied with a range of metallic oxides, including for example but not limited to iron, chromium, nickel, vanadium, or manganese, or any other metal oxide where a hydrogen containing gas can be used to reduce the oxide to a lower or even metallic state and these reduced oxides can directly be applied in the metals industry.

6. A process that is innovative in that it can be technically or economically optimized depending on the requirement and financial situation to produce more hydrogen or more DRI or higher quality of either.

7. A process that does not require reuse or recycling or disposal or reactivation of the metal oxide used for cracking of, but not limited to, specifically ammonia, because the catalyst can directly be used in the metal processing industry for that used oxide, though it is not excluded to reactivate or reuse said catalyst in the same reactor.

8. A process that allows replacement of part or all the ammonia by reducing gases like but not limited to methane, natural gas, biogas, syngas, or gasified products like methanol.

9. A process that can be applied countercurrent or co-current.
